# EUROPÄISCHE PATENTANMELDUNG

(11) **EP 2 181 825 A1**
(43) Veröffentlichungstag der Anmeldung: **05.05.2010**
(21) Anmeldenummer: 09008158.9
(22) Anmeldetag: 22.06.2009
(51) Int. Cl.: B29C 33/68, B29C 37/00, B29C 53/08, B29D 23/20

(54) **Verfahren zur Herstellung eines Schlauchs oder Rohrs unter Verwendung eines Gleitgewebes und durch das Verfahren hergestelles Produkt**

(30) Priorität: 31.10.2008 DE 102008054076
(71) Anmelder: VERITAS AG, 63571 Gelnhausen (DE)
(72) Erfinder: Hadamietz, Mario, 06846 Dessau (DE); Braun, Andreas, 99869 Seebergen (DE)
(74) Vertreter: Grünecker, Kinkeldey, Stockmair & Schwanhäusser Anwaltssozietät

(57) **Zusammenfassung**

Die vorliegende Erfindung betrifft ein Verfahren zur Formgebung eines flexiblen Schlauchs oder Rohrs, vorzugsweise eines Luftansaugkrümmers, bei dem ein Rohling (1) auf einen Formdorn (3) aufgebracht, der Rohling unter thermodynamischen Bedingungen, vorzugsweise Vulkanisation, in Form gebracht wird und zur besseren Löslichkeit von fertigem Schlauch oder Rohr und Dorn ein Gewebeschlauch (2) als Trennmittel eingesetzt wird, wobei das Trennmittel durch wenigstens ein Befestigungsmittel (4,5) an dem Rohling fixiert wird.

## Beschreibung

Die Erfindung betrifft ein Verfahren zur Formgebung eines flexiblen Schlauchs oder Rohrs nach dem Oberbegriff des Anspruchs 1. Weiterhin betrifft die Erfindung ein Verfahren nach dem Oberbegriff des Anspruchs 7. Und schließlich betrifft die Erfindung einen Schlauch oder ein Rohr nach Anspruch 10.

Vorgeformte flexible Schläuche oder Rohre durchlaufen einen aufwendigen Prozess der Formgebung. Die eigentliche Formgebung wird durch veränderliche thermodynamische Bedingungen durchgeführt. Diese als Vulkanisation bezeichneten Bedingungen geben den Schläuchen und Rohren ihre endgültige Form. Auf eine entsprechende Länge zugeschnittene Rohlinge werden auf einen Formdorn aufgebracht, der die gewünschte Endform der Schläuche und Rohre aufweist. In Vorbereitung der eigentlichen Formgebung wird ein Rohling auf den Formdorn aufgezogen, wobei diese Arbeit manuell erfolgt, da die Formen der Dorne recht kompliziert sein können und hierfür Maschinen ungeeignet sind. Der auf den Formdorn aufgezogene Rohling wird sodann in einem Autoklaven vulkanisiert.

Aufgrund von Reibungskräften, die beim Aufdornen und Abdornen des Rohlings bzw. des fertigen Schlauchs oder Rohrs auftreten, ist für die Arbeit ein erheblicher Kraftaufwand erforderlich. Zur Erleichterung dieser Arbeit ist es allgemein üblich, Gleitmittel einzusetzen, die die Reibung zwischen Dorn und Rohling bzw. Schlauch oder Rohr mindern. Bekannt sind hierfür flüssige und feste Gleitmittel. Flüssige Gleitmittel haben den Nachteil, dass sie Belastungen für Personal und Umwelt zur Folge haben. Als feste Gleitmittel werden, wie aus der DE 43 27 239 A1 bekannt, Hilfsschläuche eingesetzt, die zwischen Formdorn und Schlauch eingebracht werden. Diese Hilfsschläuche sind als entweder teflonbeschichtete Gewebeschläuche oder als Metallgliederschläuche ausgebildet.

Für das erleichterte Aufdornen und Abdornen ist es vorgesehen, dass die Hilfsschläuche länger als der Rohling bzw. der Schlauch oder das Rohr ausgeführt ist. Zum Aufdornen und Abdornen wird einfach der überstehende Hilfsschlauch umgriffen und mit dem Rohling bzw. dem Schlauch oder Rohr auf- oder abgedornt. Diese Handhabung dient der Verminderung von Beschädigungen an dem Produkt, das sowohl als Halbzeug wie auch als fertiges Produkt empfindlich gegenüber äußeren Einwirkungen ist.

Im Verfahrensablauf des Auf- und Abdornens hat sich nun aber ergeben, dass die lose Anordnung des Hilfsschlauchs innerhalb des Schlauchs oder Rohrs nachteilig ist. Es besteht nämlich immer die Möglichkeit, dass der Hilfsschlauch verrutscht und nicht mehr vollständig den Lumen ausfüllen. Die durch den Hilfsschlauch erdachten Vorteile würden dann nicht mehr bestehen. Des Weiteren können durch ungünstige Umstände auch Falten in dem Hilfsschlauch auftreten, die durch die Vulkanisation zu Materialschädigungen und damit zur Unbrauchbarkeit des Schlauchs oder Rohrs führen können.

Der Erfindung liegt die Aufgabe zugrunde, ein Verfahren der einleitend genannten Art derart weiterzuentwickeln, dass der Hilfsschlauch in dem Lumen nicht mehr verrutscht. Eine weitere Aufgabe der vorliegenden Erfindung ist es, ein Verfahren und ein Produkt zu schaffen, mit dem eine eindeutige Zuordnung eines Schlauchs oder Rohrs möglich ist.

Die Aufgabe wird erfindungsgemäß durch die Merkmale des Anspruchs 1 gelöst. Danach wird ein Trennmittel durch wenigstens ein Befestigungsmittel an dem Rohling fixiert. Die Fixierung des Trennmittels verhindert ein Verrutschen des Trennmittels in dem Rohling. Dadurch ist es möglich, den Rohling mit dem Trennmittel auf den Formdorn aufzuziehen, ohne Gefahr laufen zu müssen, dass sich das als Gewebeschlauch ausgebildeter Trennmittel verrutscht oder Falten schlägt. Nachfolgend wird der Gewebeschlauch auch als Gleitgewebe bezeichnet.

In einer bevorzugten Ausführungsform der Erfindung ist das Befestigungsmittel eine auf ein Ende des Rohlings anzuordnende Hülse. Das Gleitgewebe ist für gewöhnlich länger ausgebildet als der Rohling, so dass die Hülse zumindest ein über das Ende des Rohlings hervorstehende Ende des Gleitgewebes fixieren kann. Hierdurch wird auch das übrige Gleitgewebe derart fixiert, dass ein Herausrutschen aus dem Rohling unmöglich ist. Vorzugsweise wird der Rohling mit dem Ende, an dem die Hülse angeordnet ist, zuerst auf den Formdorn gezogen. Da durch die Fixierung des Gleitgewebes an dem Rohling auch die Hülse mit dem Rohling verbunden ist, kann deshalb zum Aufdornen die Hülse umgriffen werden, wodurch der Rohling geschont und eine mögliche Beschädigung vermieden wird.

In einer weiteren besonders vorteilhaften Ausgestaltung wird das Trennmittel an dem oder einem anderen Ende des Rohlings durch jeweils eine Hülse fixiert. Mit der Fixierung des Trennmittels an den jeweiligen Enden des Rohlings ist es somit möglich, den Rohling entweder mit dem einen Ende oder dem anderen Ende zuerst auf den Formdorn zu ziehen.

Zusätzlich wird durch die beidseitige Fixierung das Gleitgewebe noch besser in Stellung gehalten. Mit der Fixierung des Gleitgewebes kann auch eine gewisse Vorspannung des Gewebes erreicht werden, mit der sich die Unterschiede zwischen einem Umfang des Formdorns und eines Durchmessers des Rohlings besser anpassen lässt. Es ist aber auch möglich, das Gleitgewebe an den beiden jeweiligen Enden vorzufixieren und nach dem Aufdornen das Gleitgewebe zu straffen.

Gemäß einem vorteilhaften Ausführungsbeispiel wird der Rohling mit dem Gewebeschlauch als Trennmittel und den an beiden Enden des Rohlings angeordneten Hülsen auf den Formdorn aufgebracht, um dort zusätzlich fixiert zu werden. Auch wenn für gewöhnlich der Rohling mit dem Trennmittel beim Vulkanisieren auf dem Formdorn nicht erheblich verrutscht, kann es bei bestimmten Ausführungsformen nötig sein, eine präzise Ausrichtung des Rohlings während der Vulkanisation zu gewähren. Durch den Schrumpfungsprozess des Rohlings auf die gewünschte Form des Schlauchs oder Rohrs findet für gewöhnlich nur eine gewisse Verschiebung des Rohlings statt - diese kann auch nur im Millimeterbereich liegen.

Vorteilhafterweise wird das Trennmittel zumindest teilweise auch auf der Außenseite des Rohlings bzw. des Schlauchs oder Rohrs angeordnet. Die Hülse, wenn sie auf beiden Enden des Rohlings angeordnet ist, umgreift einen Bereich der jeweiligen Enden des Rohlings. Zur Fixierung des Gleitgewebes wird dieses zwischen Rohling und Hülse eingeklemmt. Dabei ist es notwendig, dass das Gleitgewebe länger als der Rohling ist, wodurch eine gesamte Anlagefläche zwischen Hülse und Rohling mit dem Gleitgewebe ausgefüllt wird. Die Anordnung des Trennmittels auf der Außenseite des Rohlings dient aber nicht nur der Fixierung des Trennmittels, sondern auch dem erleichterten Trennen von Hülse und Schlauch bzw. Rohr.

Die Aufgabe wird weiterhin erfindungsgemäß durch die Merkmale des Anspruchs 7 gelöst. Danach wird in den Schlauch oder das Rohr mittels des Trennmittels eine dreidimensionale Struktur eingebracht. Das Trennmittel, das als Gewebe ausgebildet ist, hinterlässt beim Vulkanisieren auf einer Oberfläche des Schlauchs oder Rohrs eine Struktur, die als Markierung oder Kennzeichnung dient. Über die Ausbildung des Gewebes sind die unterschiedlichsten Strukturen möglich. Insbesondere können über die Webart unterschiedliche Muster auf die Oberfläche des Schlauchs oder Rohrs eingeformt werden. Ebenso sind lokal begrenzte Strukturen durch den Gewebeschlauch in ein Material des Schlauchs oder Rohrs einbringbar. Diese Strukturen können derart gewählt werden, dass sie der eigentlichen Funktion des Schlauchs oder Rohrs nicht abträglich gegenüberstehen. Zusätzlich können aber auch mit entsprechenden Gewebeschläuchen Strukturen in die Oberfläche eingebracht werden, die die Strömungseigenschaften innerhalb des Schlauchs verbessern helfen.

Vorteilhafterweise wird auf einer Innenseite des Schlauchs oder Rohrs zumindest teilweise eine Struktur, insbesondere auch eine Mikrostruktur, eingebracht. Im Herstellungsprozess eines flexiblen Luftansaugkrümmers ist die Vulkanisation für gewöhnlich der letzte Warmverformungsprozess. Die Vulkanisation bietet also eine letzte Möglichkeit, eine Markierung oder Kennzeichnung in den Krümmer einzubringen. Die Struktur ist dabei so zu wählen, dass Material- und Funktionseigenschaften des Schlauchs oder Rohrs auftreten. Hierzu ist es besonders vorteilhaft, wenn die Struktur eine Mikrostruktur ist, die sich über eine gesamte Oberfläche der Innenseite des Schlauchs oder Rohrs erstreckt oder nur in einem abgegrenzten Bereich der Oberfläche angeordnet ist.

Gemäß einer weiteren vorteilhaften Ausbildung wird auf einer Außenseite des Schlauchs oder Rohrs zumindest teilweise eine Struktur, insbesondere auch eine Mikrostruktur, eingebracht. Die für die Innenseite des Schlauchs oder Rohrs genannten Vorteile gelten auch für die Außenseite. Vorteilig ist bei dem Aufbringen einer Mikrostruktur auf der Außenseite, dass die Struktur durch in dem Schlauch oder Rohr befindliche Fluide nicht erodiert werden kann. Zudem beeinflusst die Struktur auch nicht Strömungseigenschaften der zu transportierenden Fluide.

In einer besonders vorteilhaften Ausgestaltung der Erfindung ist die Struktur, insbesondere auch die Mikrostruktur, fühlbar und/oder sichtbar. Durch die sich von einem Rest der Oberfläche abhebende Struktur ist es möglich, die Struktur eindeutig zu identifizieren. Insbesondere ist es denkbar, dass die Struktur eine genaue Zuordnung des Produktes zulässt. Die Identifizierung kann hierbei mit einer Videoerkennung vorgenommen werden, wobei aber auch aufgrund der verschiedenen Gestaltungsmöglichkeiten der Struktur eine Lasererkennung ebenfalls denkbar ist.

Weiterhin wird die Aufgabe erfindungsgemäß durch einen Schlauch oder Rohr nach den Merkmalen des Anspruchs 10 gelöst. Danach ist der Schlauch oder das Rohr gekennzeichnet durch eine mittels eines Trennmittels in eine Oberfläche des Schlauchs oder Rohrs eingebrachte Struktur. Die Struktur wird nicht, wie sonst üblich, durch eine Negativform in die Oberfläche eingebracht, sondern durch das zur besseren Löslichkeit von Schlauch oder Rohr und der Form vorgesehene Trennmittel. Die Form kann deshalb mit einer glatten Oberfläche ausgebildet sein, wodurch es möglich wird, mit derselben Form unterschiedliche Strukturen in einen Schlauch oder Rohr einzuformen. Hierzu muss lediglich das Trennmittel ausgetauscht werden, was erfindungsgemäß ein Gleitgewebe ist.

Nach einem vorteilhaften Ausführungsbeispiel der Erfindung ist die Oberfläche des Schlauchs oder Rohrs eine innenliegende und/oder außenliegende Oberfläche. Zur Einformung der Struktur in die Oberfläche spielt es nämlich keine Rolle, ob die Struktur auf der außenliegenden Oberfläche oder in dem Lumen, also auf der innenliegenden Oberfläche des Schlauchs oder Rohrs, angeordnet ist. Die Struktur ist dabei als eine Mikrostruktur ausgebildet. Durch die Mikrostruktur werden Beeinträchtigungen, die durch Einformungen hervorgerufen werden, auf ein Minimum reduziert.

Besonders vorteilhaft ist es, wenn die Struktur, insbesondere auch die Mikrostruktur, fühlbar und/oder sichtbar ist. Dann nämlich lässt sich die Struktur zur Identifizierung des Schlauchs oder Rohrs heranziehen. Erfindungsgemäß können unterschiedliche Identifizierungen auf bzw. in den Schlauch oder das Rohr eingebracht werden.

Vorteilhafterweise ist das Gleitgewebe aus einem Gewebe, einem Gewirk, einem Geflecht, einem Gestrick oder gewebeähnlich strukturierten Materialen gebildet. Mit den unterschiedlichen Textilarten kann das Gleitgewebe besonders gut auf unterschiedliche Strukturen und Beschaffenheiten des Schlauchs oder des Rohrs abgestimmt werden.

Gemäß einer Weiterbildung der Erfindung liegt eine Faserstärke des Gleitgewebes im Bereich von 0,001 mm bis 0,5 mm, vorzugsweise im Bereich von 0,01 mm bis 0,1 mm. In Versuchen hat sich ergeben, dass sich mit einer solchen Faserstärke besonders gute Gleiteigenschaften hinsichtlich des Dornes und auf der anderen Seite eine Haftung an den Schlauch oder das Rohr erreichen lassen.

Ebenso liegt in einem vorteilhaften Ausführungsbeispiel der Erfindung eine Materialstärke des Gleitgewebes im Bereich von 0,0015 mm bis 0,075 mm, vorzugsweise im Bereich von 0,015 mm bis 0,15 mm. In Abhängigkeit einer inneren Oberfläche des Schlauches oder Rohrs ist das Material des Gleitgewebes unterschiedlich stark ausgebildet. Zudem kann die Materialstärke auch innerhalb des Gewebeschlauches variieren, um Strukturen in den Schlauch oder das Rohr einzubringen.

Nach einer Weiterbildung der Erfindung weist das Gleitgewebe eine Maschenweite auf, die entscheiden ist hinsichtlich einer Verzahnung von Material des Schlauches oder Rohrs und dem Gewebeschlauch. Es ist, wie bereits erwähnt, besonders vorteilhaft, wenn eine gewisse Haftung, die auf jeden Fall größer als zwischen Gewebeschlauch und Dorn sein soll, gegeben ist. Durch eine größere Maschenweite lässt sich bei bestimmten Materialien eine höhere Haftung erreichen.

Gemäß einer besonderen Ausführungsform ist das Gleitgewebe aus Kunststoff oder natürlichen Stoffen oder dergleichen gebildet, vorzugsweise ist das Gleitgewebe aus polymerem Kunststoff. Die unterschiedlichen Materialien weisen unterschiedlich Materialeigenschaften auf, die besonders vorteilhaft mit den unterschiedlichen Materialien der Schläuche und Rohre zur Geltung kommen.

In einer besonderen Ausgestaltung ist das Gleitgewebe zusätzlich beschichtet, insbesondere weist es eine Schicht auf, die die Löslichkeit des Gleitgewebes von dem Dorn und/oder dem Schlauch oder Rohr erleichtert. Die Schicht kann dabei auf beiden Seiten des Gewebeschlauches aufgetragen sein, nämlich einer Innenseite und einer Außenseite. Alternativ kann auch nur eine Seite eine Schicht aufweisen, in Abhängigkeit der Anforderungen an die Gleitfähigkeit zwischen den einzelnen Komponenten.

Weitere vorteilhafte Ausgestaltungen des Verfahrens und des Produktes ergeben sich aus den Unteransprüchen.

Ein bevorzugtes Ausführungsbeispiel der Erfindung wird nachfolgend anhand der Zeichnung näher erläutert. In dieser zeigen:
- Fig. 1: einen seitlichen Schnitt durch einen Rohling und darin locker angeordnetes Gleitgewebe,
- Fig. 2: einen seitlichen Schnitt durch einen Rohling mit einem darin angeordneten und an Enden umgeschlagenen Gleitgewebe,

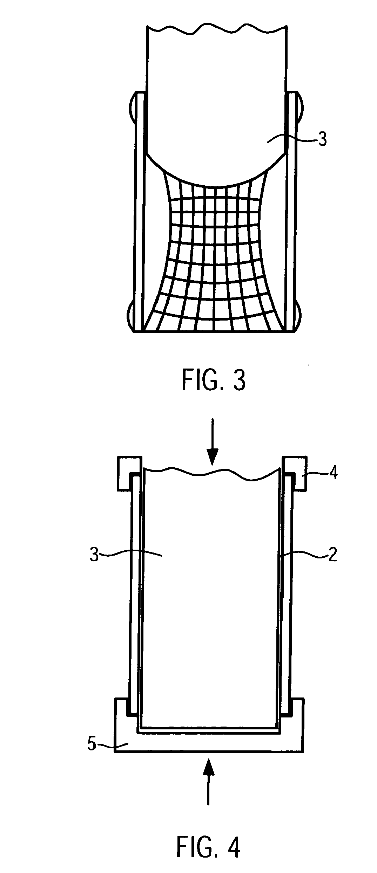

- Fig. 3: einen seitlichen Schnitt durch einen Rohling mit darin angeordnetem Gleitgewebe und teilweise eingeführtem Formdorn, und
- Fig. 4: einen seitlichen Schnitt durch einen Formdorn mit aufgezogenem Rohling, Gleitgewebe und Hülsen.

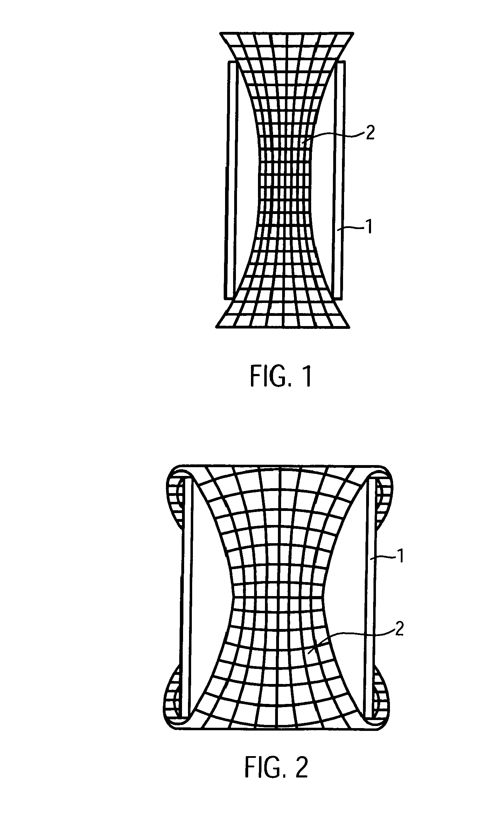

In Fig. 1 ist ein seitlicher Schnitt durch einen Rohling 1 gezeigt. Der Rohling 1 weist zueinander parallel gerade Seitenflächen auf, wobei aber auch in anderen nicht dargestellten Ausführungsformen des Rohlings 1 gekrümmte oder nicht parallel zueinander verlaufende Seitenflächen möglich sind. Der Rohling 1 wird zur Herstellung von Schläuchen oder Rohren verwendet. Hierzu wird er in einem sogenannten Formgebungsprozess unter veränderlichen thermodynamischen Bedingungen, insbesondere durch Vulkanisieren, zu einer Endform geformt.

Für den Formgebungsprozess werden nicht nur, wie in Fig. 1 dargestellt, gerade Rohlinge 1 eingesetzt, sondern auch bereits schon vorgeformte Rohlinge. Diese Rohlinge entsprechen in etwa der späteren Endform der Schläuche oder Rohre, müssen aber noch einer finalen Formgebung unterzogen werden.

In dem Rohling 1 ist ein Gleitgewebe 2 angeordnet. Das Gleitgewebe 2 wird als ein Trennmittel in dem Formgebungsprozess eingesetzt. Der Rohling 1 wird mit dem Gleitgewebe 2 auf einem Dorn 3 aufgedornt, wobei das Gleitgewebe 2 zwischen dem Rohling 1 und dem Dorn 3 zu liegen kommt. Durch die Vulkanisation in einem Autoklaven schrumpft der Rohling 1 auf eine Größe des Dorns 3. Zur Minderung eines Reibungskoeffizienten zwischen dem Rohling 1 und dem Dorn 3 werden Trennmittel eingesetzt, wie im vorliegenden Ausführungsbeispiel als ein Gleitgewebe 2. Durch die Anordnung des Gleitgewebes 2 in einem Zwischenraum zwischen Rohling 1 und Dorn 3 kann der fertige Schlauch oder das Rohr leichter von dem Dorn 3 abgedornt werden.

Das Gleitgewebe 2 weist in einem mittleren Bereich einen wesentlich geringeren Durchmesser als der Rohling 1 auf. In jeweiligen Endbereichen des Gleitgewebes 2 ist der Durchmesser größer als der des Rohlings 1. Das Gleitgewebe 2 ist elastisch ausgebildet, wodurch das Gleitgewebe 2 sich einer Form und einer Größe des Dorns 3 leicht anpasst. Zusätzlich liegt der Gewebeschlauch 2 nach dem Aufdornen in Dichtlage auf dem Dorn 3. Damit ist sichergestellt, dass das Gleitgewebe 2 beim Vulkanisationsprozess nur einer Kontur des Dorns 3 entspricht und keine Falten schlägt.

In Vorbereitung der Vulkanisation wird in den Rohling 1 zuerst das Gleitgewebe 2 eingesetzt, was exemplarisch in Fig. 1 dargestellt ist. Danach werden, wie in Fig. 2 dargestellt, die jeweiligen Enden des Gleitgewebes 2 umgeschlagen, so dass die Endbereiche des Gleitgewebes 2 zumindest teilweise eine Außenseite des Rohlings 1 umgreifen. Durch die flexible Struktur des Gleitgewebes 2 und des wesentlich kleineren Durchmessers als der des Rohlings 1, sind insbesondere die Endbereiche des Gleitgewebes 2 beim Umgreifen unter Spannung. Die Flexibilität hat darüber hinaus auch keine Auswirkungen auf den Formgebungsprozess, da sich das Gleitgewebe, insbesondere in einem Randbereich des Rohlings 1, in dem das Gleitgewebe 2 auf den Durchmesser des Rohlings 1 gedient ist, beim Vulkanisieren auf die Größe und Form des Dorns 3 anpasst.

Andererseits kann auch ein Gleitgewebe 2 gewählt werden, das weniger oder gar nicht elastisch ausgebildet ist. Bei einem solchen Gleitgewebe 2 ist dann aber darauf zu achten, dass dieses in etwa der Kontur des Dorns 3 entspricht, damit keine ungewollten Einformungen in den Rohling 1 beim Vulkanisieren durch Faltenschlagung des Gewebeschlauchs auftreten. Solche Gleitgewebe werden für gewöhnlich mit Hilfe von Befestigungsmitteln vorgespannt. Die Montage und Vorspannung wird weiter unten näher erklärt.

Beim Aufdornen des Rohlings 1 auf den Dorn 3 ist darauf zu achten, dass das Gleitgewebe 2 nicht verrutscht. Das Aufdornen ist bei relativ geraden und konturlosen Dornen vergleichsweise einfach. Das Aufdornen bzw. auch das Abdornen erfolgt händisch. Deshalb ist es für gewöhnlich ausreichend, wenn der Abschnitt des Gleitgewebes 2, der aus dem Rohling 1 herausragt und den oberen Bereich der Außenseite des Rohlings 1 umschließt, beim Aufdornen festgehalten wird. Das Gleitgewebe 2 kann dann nicht aufgrund der im Bereich des Dorns 3 auftretenden rückhaltenden Kräfte verrutschen und in den Rohling 1 reingezogen werden. Hingegen ist bei sehr konturierten Dornen 3 erheblich mehr Kraft zum Aufdornen erforderlich. Deshalb ist es nicht immer gegeben, das Gleitgewebe 2 mit zu umgreifen, um ein Verrutschen zu verhindern. In solchen Fällen muss das Gleitgewebe 2 an dem Rohling 1 fixiert werden, um ein Verrutschen beim Aufdornen zu verhindern. Hierzu ist vorgesehen, wenigstens ein Befestigungsmittel in dem Rohling 1 anzuordnen, mit dem das Gleitgewebe 2 fixiert wird. Ein solches Befestigungsmittel ist in Form einer Hülse 4 vorgesehen.

Die Hülse 4 korrespondiert mit einem Querschnitt des Rohlings 1, wobei sie eine mittlere Aussparung aufweist. Die Aussparung ist derart dimensioniert, dass der Dorn 3 durch die Aussparung hindurchpasst. Die Hülse 4 umgreift den äußeren Randbereich des Rohlings 1, wodurch der Gewebeschlauch 2 zwischen Hülse und Rohling 1 zu liegen kommt. Insbesondere wird durch die Anordnung der Hülse 4 auf dem Rohling 1 das Gleitgewebe 2 unverrückbar eingeklemmt, wodurch zumindest das der Hülse 4 zugeordnete Ende des Gleitgewebes 2 fixiert wird. Zum Aufdornen wird der Rohling 1 mit dem die Hülse 4 aufweisenden Ende zuerst auf den Dorn 3 gezogen. Durch die Fixierung des Gleitgewebes 2 an diesem Ende wird ein in dem Rohling 1 befindlicher Teil des Gleitgewebes 2 nachgezogen. Die im Bereich des Dorns 3 auftretenden Rückhaltekräfte können das Gleitgewebe 2 nicht mehr verrutschen lassen.

In einem anderen Ausführungsbeispiel der Erfindung kann es indes hilfreich sein, wenn ein anderes Ende des Rohlings 1 im ebenfalls mit einer Hülse 5 versehen wird. Die Hülse 5 umschließt dabei ebenfalls, jetzt aber einen anderen Randbereich des Rohlings 1. Das Gleitgewebe 2 wird in diesem Bereich durch die Hülse 5 fixiert. Die Hülse 5 ist mit einem Abschluss versehen, der das Ende des Rohlings 1 bedeckt. Die Abdeckung dient als Begrenzung beim Aufdornen des Rohlings 1 auf den Dorn 3.

In den Fällen, dass ein nicht oder nur wenig flexibles Gleitgewebe 2 als Trennmittel eingesetzt wird, wird dieses vorzugsweise vorgespannt. Dazu wird das Gleitgewebe 2 mit den Hülsen 4, 5 auf dem Rohling 1 eingespannt und mit einer Zuglast belastet. Durch die Zugbelastung wird das Gleitgewebe 2 vorgespannt, wodurch unerwünschte Verschiebungen oder Faltenbildung vermieden wird.

Beim Formgebungsprozess schrumpft der Rohling 1 auf die Größe des Dorns 3. Durch den Schrumpfungsprozess wird der Zwischenraum zwischen Hülse 4, 5 und Rohling vergrößert, wodurch die Fixierung des Gleitgewebes 2 gelockert wird. Die Hülse 4, 5 dient vor allem der Fixierung des Gleitgewebes 2 während des Aufdornens, so das eine Lockerung des Gleitgewebes 2 während des Formgebungsprozesses sich nicht nachteilig auswirkt. Beim Abdornen des Rohlings 1 vom Dorn 3 können die Hülsen 4, 5 einfach vom Dorn 3 abgezogen werden.

In einem nicht weiter dargestellten Ausführungsbeispiel wird der Rohling 1 auf dem Dorn 3 fixiert. Insbesondere bei Rohlingen 1, die einen sehr viel größeren Querschnitt als der Dorn 3 aufweisen und somit nur locker auf dem Dorn 3 sitzen, kann eine Fixierung notwendig werden. Die Ausrichtung des Rohlings 1 auf dem Dorn 3 ist aufgrund von Materialeigenschaften oder auch Funktionseigenschaften des Schlauchs oder Rohrs notwendig. Der Rohling 1 wird mittels der Hülse 5 auf dem Dorn 3 fixiert. Hierzu weist die Hülse 5 und der Dorn 3 entsprechende Mittel auf.

Mit dem Gleitgewebe 2 lassen sich auch bei dem Formgebungsprozess Strukturen auf einer Oberfläche des Rohlings 1 einbringen. Das Gleitgewebe 2 ist, wie bereits oben dargestellt, zwischen Dorn 3 und dem Rohling 1 positioniert. Eine Oberflächenstruktur des Gleitgewebes 2 wird demnach bei der Formgebung auf einer innenliegenden Oberfläche des Rohlings 1 abgedrückt. Diese Tatsache wird erfindungsgemäß dazu benutzt, das Gleitgewebe 2 mit einer besonderen Gestaltung seiner Oberfläche zu versehen. Dieses kann zum einen durch sich unterscheidende Webarten des Gewebes erzielt werden. Zum anderen werden ganz spezielle Strukturen auf das Gleitgewebe 2 aufgebracht, die sich in dem Rohling 1 abdrücken. Die in den Rohling 1 eingeformten Strukturen sind insbesondere Mikrostrukturen. Mikrostrukturen beeinflussen nicht die Funktionseigenschaften der Schläuche und Rohre. Sie sind aber dennoch so bemessen, dass sie fühlbar und/oder sehbar sind.

Die Strukturen und Mikrostrukturen dienen der Identifizierung. Aufgrund der Vielzahl unterschiedlicher Schläuche und Rohre ist es vorteilig, einen Schlauch oder Rohr schnell und einfach identifizieren zu können. Denkbar ist es, eine Identifizierung mittels Videoerkennung zu ermöglichen. Videokameras können schnell und präzise auch kleine Strukturen erkennen, so dass zur Vermeiden von Funktionsbeeinträchtigungen Mikrostrukturen ausreichend sind.

Mit der Anordnung des Gleitgewebes 2 auch auf der Außenseite des Rohlings können diese Strukturen auch auf der Außenseite eingeformt werden. Hierzu bedarf es indes eines gesonderten Widerlagers, das die Struktur des Gleitgewebes 2 in die Oberfläche des Rohlings 1 eindrückt. Das gesonderte Widerlager muss während des Formgebungsprozesses nachgeführt werden, da der Rohling 1 beim Vulkanisieren schrumpft. Alternativ kann auch ein Widerlager gewählt werden, das vorgespannt wird.

Das Gleitgewebe ist aus Gewebe, Gewirk, Geflecht, Gestrick oder gewebeähnlich strukturierten Materialien gebildet. Dabei bedeutet gewebeähnlich strukturierte Materialien Flächengebilde, die ähnlich wie Gewebe eine Struktur aus vertikal zu einander liegenden Materialsträngen aufweisen, aber nicht gewebt sind. In einem Kreuzungsbereich liegen die Materialstränge nicht übereinander sondern sind integral mit einander verbunden.

Die Löslichkeit des Schlauches oder Rohrs vom Dorn 3 ist insbesondere auch durch die Materialeigenschaften des Trennmittels, als des Gleitgewebes bestimmt. Auch der einen Seite muss das Gleitgewebe leicht von dem Dorn 3 trennbar, also abziehbar sein, auf der anderen Seite darf es sich nicht zu leicht von der Innenseite des Schlauches oder Rohrs lösen. Deshalb weist das Gleitgewebe eine Struktur auf, die sich mit dem Material des Schlauches oder Rohrs derart verbindet, dass beim Abziehen das Schlauches oder Rohrs vom Dorn 3 das Gleitgewebe mit abgezogen wird. Das bedeutet, dass das Gleitgewebe in Bezug auf den Dorn 3 eine hohe Lösbarkeit bzw. Gleitfähigkeit aufweist, die zumindest höher ist, als eine Lösbarkeit des Gleitgewebes von dem Schlauch oder Rohr.

Hierzu ist das Gleitgewebe aus Materialien gebildet, die sich gut mit dem Schlauch oder Rohr verbinden. Solche Materialien können Kunststoffe oder natürliche Stoffe oder dergleichen sein, vorzugsweise polymere Kunststoffe. Auch ist eine Verbindung des Gleitgewebes mit dem Schlauch oder Rohr abhängig von einer Materialstärke des Gleitgewebes. Durch die Dichtlage des Schlauches oder Rohrs auf dem Dorn wird die strukturierte Oberfläche des Gleitgewebes in den Schlauch oder das Rohr eingepresst. Je nach Stärke der Fäden, Fasern oder Materialstränge wird das Gleitgewebe unterschiedlich stark in den Schlauch oder das Rohr gedrückt.

Auch ist in diesem Zusammenhang eine Maschenweite des Gleitgewebes relevant, denn je weiter der Abstand der Fäden oder Materialstränge ist, desto tiefer kann sich der Schlauch oder das Rohr in das Gleitgewebe einformen. Deshalb ist es vorgesehen, das Gleitgewebe mit einer Faserstärke von 0,001 mm bis 0,5 mm vorzusehen. Besonders vorteilhaft liegt die Faserstärke in einem Bereich von 0,01 mm bis 0,1 mm. Hinsichtlich einer Materialstärke des Gleitgewebes liegt dieses in einem Bereich von dem anderthalbfachen der Faserstärke, also im Bereich von 0,0015 mm bis 0,75 mm, vorzugsweise im Bereich von 0,015 mm bis 0,15 mm.

Zusätzlich kann das Gleitgewebe mit einer Beschichtung versehen sein. Ein solche Beschichtung dient der Löslichkeit des Gleitgewebes von dem Dorn einerseits. Andererseits kann die Beschichtung alternativ oder zusätzlich auf einer Seite des Gleitgewebes aufgetragen sein, die dem Schlauch oder Rohr zugewandt ist, so dass sich das Gleitgewebe leichter von dem Schlauch oder Rohr lösen lässt.

## Patentansprüche

1. Verfahren zur Formgebung eines flexiblen Schlauchs oder Rohrs, vorzugsweise eines Luftansaugkrümmers, bei dem ein Rohling (1) auf einen Formdorn (3) aufgebracht, der Rohling (1) unter thermodynamischen Bedingungen, vorzugsweise Vulkanisation, in Form gebracht wird und zur besseren Löslichkeit von fertigem Schlauch oder Rohr und Dorn (3) ein Gewebeschlauch (2) als Trennmittel eingesetzt wird, **dadurch gekennzeichnet, dass** das Trennmittel durch wenigstens ein Befestigungsmittel an dem Rohling (1) fixiert wird.

2. Verfahren nach Anspruch 1, **dadurch gekennzeichnet, dass** das Befestigungsmittel eine auf ein Ende des Rohlings (1) anzuordnende Hülse (4, 5) ist.

3. Verfahren nach Anspruch 1 oder 2, **dadurch gekennzeichnet, dass** das Trennmittel an dem und an einem anderen Ende des Rohlings (1) durch jeweils eine Hülse (4, 5) fixiert wird.

4. Verfahren nach mindestens einem der vorherigen Ansprüche 1 bis 3, **dadurch gekennzeichnet, dass** der Rohling (1) mit dem Gewebeschlauch (2) als Trennmittel und den an beiden Enden des Rohlings (1) angeordneten Hülsen (4, 5) auf den Formdorn (3) aufgebracht wird und auf dem Formdorn (3) zusätzlich fixiert wird.

5. Verfahren nach einem der vorhergehenden Ansprüche 1 bis 4, **dadurch gekennzeichnet, dass** das Trennmittel zumindest teilweise auch auf der Außenseite des Rohlings (1) bzw. des Schlauchs oder Rohrs angeordnet wird.

6. Verfahren nach einem der vorhergehenden Ansprüche 1 bis 4, **dadurch gekennzeichnet, dass** wenigsten eine der Hülsen (4, 5) eine Außenseite des Rohlings (1) bzw. des Schlauchs oder Rohrs zumindest teilweise bedeckt und das Trennmittel zwischen Hülse (4, 5) und Rohling (1) bzw. Schlauch oder Rohr angeordnet wird.

7. Verfahren zur Formgebung eines flexiblen Schlauchs oder Rohrs, insbesondere nach Anspruch 1, bei dem ein Rohling auf einen Formdorn (3) aufgebracht, der Rohling (1) unter thermodynamischen Bedingungen, vorzugsweise Vulkanisation, in Form gebracht wird und zur besseren Löslichkeit von fertigem Schlauch oder Rohr und Dorn (3) ein Gewebeschlauch (2) als Trennmittel eingesetzt wird, **dadurch gekennzeichnet, dass** mittels des Trennmittels eine dreidimensionale Struktur in den Schlauch oder das Rohr eingebracht wird.

8. Verfahren nach mindestens einem der vorgehenden Ansprüche 1 bis 7, **dadurch gekennzeichnet, dass** auf eine Innenseite und/oder Außenseite des Schlauchs oder Rohrs zumindest teilweise eine Struktur, insbesondere Mikrostruktur, eingebracht wird.

9. Verfahren nach mindestens einem der vorhergehenden Ansprüche 1 bis 8, **dadurch gekennzeichnet, dass** die Struktur, insbesondere auch die Mikrostruktur, fühlbar und/oder sichtbar ist, wobei insbesondere die Struktur einer Identifizierung des Schlauchs oder Rohrs dient.

10. Schlauch oder Rohr, **gekennzeichnet durch** eine mittels eines Trennmittels in eine Oberfläche des Schlauchs oder Rohrs eingebrachte Struktur.

11. Schlauch oder Rohr nach Anspruch 10, **dadurch gekennzeichnet, dass** das Trennmittel ein Gleitgewebe (2) ist.

12. Schlauch oder Rohr nach Anspruch 10 oder 11, **dadurch gekennzeichnet, dass** die Oberfläche des Schlauchs oder Rohrs eine innen liegende und/oder außen liegende Oberfläche ist.

13. Schlauch oder Rohr nach mindestens einem der vorhergehenden Ansprüche 10 bis 12, **dadurch gekennzeichnet, dass** die Struktur eine Mikrostruktur ist, wobei die Struktur, insbesondere auch die Mirkostruktur, fühlbar und/oder sichtbar ist, insbesondere zu einer Identifizierung des Schlauchs oder Rohrs.

14. Schlauch oder Rohr nach mindestens einem der vorhergehenden Ansprüche 10 bis 13, **dadurch gekennzeichnet, dass** das Gleitgewebe aus einem Gewebe, einem Gewirk, einem Geflecht, einem Gestrick oder gewebeähnlich strukturierten Materialen gebildet ist, wobei eine Faserstärke des Gleitgewebes im Bereich von 0,001 mm bis 0,5 mm liegt, vorzugsweise im Bereich von 0,01 mm bis 0,1 mm, und wobei .eine Materialstärke des Gleitgewebes im Bereich von 0,0015 mm bis 0,75 mm liegt, vorzugsweise im Bereich von 0,015 mm bis 0,15 mm.

15. Schlauch oder Rohr nach mindestens einem der vorhergehenden Ansprüche 10 bis 14, **dadurch gekennzeichnet, dass** das Gleitgewebe aus Polyamid oder dergleichen gebildet ist und insbesondere zusätzlich beschichtet ist, insbesondere eine Schicht aufweist, die die Löslichkeit des Gleitgewebes von dem Dorn und/oder dem Schlauch oder Rohr erleichtert.
